# EUROPEAN PATENT SPECIFICATION

(11) **EP 4 550 021 B1**
(45) Date of publication and mention of the grant of the patent: **31.12.2025**
(21) Application number: 23208082.0
(22) Date of filing: 06.11.2023
(51) Int. Cl.: G02B 21/00

(54) **FAST AND PROGRAMMABLE REFLECTANCE CONFOCAL MICROSCOPY WITH DIGITAL MICROMIRROR DEVICE**
KONFOKALE MIKROSKOPIE MIT SCHNELLER UND PROGRAMMIERBARER REFLEXION MIT DIGITALER MIKROSPIEGELVORRICHTUNG
MICROSCOPIE CONFOCALE A REFLECTANCE PROGRAMMABLE ET RAPIDE AVEC DISPOSITIF A MICROMIROIRS NUMERIQUES

(43) Date of publication of application: 07.05.2025
(73) Proprietor: Valstybinis Moksliniu Tyrimu Institutas Fiziniu Ir Technologijos Mokslu Centras, 02300 Vilnius (LT)
(72) Inventor: Auksorius, Egidijus, LT-10257 Vilnius (LT); Rutkauskas, Danielis, LT-10257 Vilnius (LT); Adomavicius, Karolis, LT-10257 Vilnius (LT)
(74) Representative: Klimaitiene, Otilija

(56) References cited:
- EP-A1- 4 246 205
- EP-B1- 3 465 158
- US-A- 5 587 832
- US-B1- 9 535 242
- RUTKAUSKAS DANIELIS ET AL: "Optimization of time-domain full-field optical coherence tomography with digital confocal line-scanning", 20230811, vol. 12632, 11 August 2023 (2023-08-11), pages 126321S - 126321S, XP060186898, ISSN: 0277-786X, ISBN: 978-1-5106-6473-9, DOI: 10.1117/12.2670591
- KROHNE I ET AL: "NEW METHOD FOR CONFOCAL MICROSCOPY AND ITS ENDOSCOPIC APPLICATION", PROCEEDINGS OF SPIE, IEEE, US, vol. 5143, no. 1, 1 January 2003 (2003-01-01), pages 281 - 288, XP001204781, ISBN: 978-1-62841-730-2, DOI: 10.1117/12.500763

## Description

### FIELD OF INVENTION

The invention belongs to the field of optical microscopy, which employs freely programmable patterns for illumination and detection. Specifically, it relates to confocal imaging using a digital micromirror device (DMD).

### BACKGROUND ART

In confocal microscopy, as described in the US patent US3,013,467, a diffraction-limited spot is created on a sample, which is then imaged on a pinhole. Light going through the pinhole is detected by a detector ensuring that only light from the focal plane of a sample can reach the detector. Thus, out-of-focus planes or spatially offset locations within the imaging plane are blocked out, resulting in the "optical section" of a sample.

Such confocal microscopes are usually constructed with a single pinhole that can effectively measure only one point at a time. A point-by-point scanning is necessary to build a single confocal image which is inherently slow.

To increase the throughput/speed of a confocal microscope, an array of scanning light spots can be created by spinning a Nipkow disk as explained in, for example, the European patent EP0320760B1.

However, the spinning disc might introduce vibrations in the system, and thus, blur images that are being acquired. Most importantly, the size and the arrangement of the pinholes/lenses in the disc are fixed and cannot be changed, which can be desired to optimize image quality.

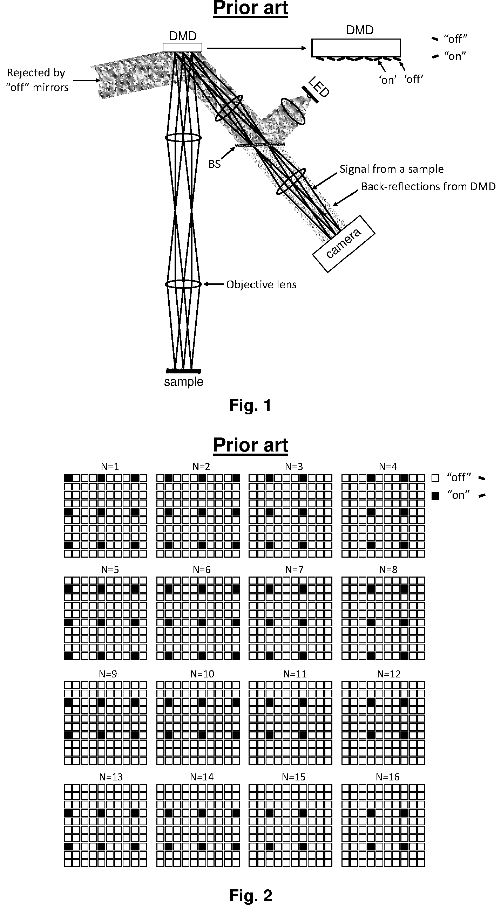

Alternatively, a spatial light modulator array, such as a digital micromirror device, can provide such programmability in terms of pinhole size and spacing. For example, the US patent US5,923,466 describes a spatially light-modulated confocal microscope in which a DMD is imaged on a sample with a programmable number of light spots with variable size and spacing. Specifically, any single micromirror of the DMD can alternate between one of two resting states; those that project light onto the sample are designated as being in the "on"-position, whereas the others are in the "off"-position. Provided that the projected illumination spots are well separated, in other words, discrete illumination spots, in order to avoid crosstalk, the confocal measurement process may take place in parallel. For this, the same DMD can serve as a pinhole array to block out-of-focus light for multiple spots. This is called double-pass operation as light passes through the same DMD area twice. The filtered light is then imaged on a camera, as shown in Fig. 1. Since a single array of spots will only sparsely sample a specimen, scanning of the specimen can be implemented by changing the patterns. If to form an array of spots/pinholes every N^{th} micromirror is switched "on" in both (*x* and *y*) directions, then NxN = N² different array patterns are necessary to completely scan the sample. **Fig. 2** shows all the (16) patterns that need to be generated when every 4^{th} micromirror is switched "on" to generate a single multispot array. In principle, to generate a confocal image, every 2^{nd} - n/2^{th} micromirror can be set "on", where *n* is the number of micromirrors in the DMD in either its *x* or *y* direction, resulting in 4 - n² patterns necessary to scan the sample. The lower the *N*, the faster the sample is scanned but with more signal crosstalk, and thus poorer images. If, for example, every micromirror is set to the "on" position, the system becomes a conventional wide-field fluorescence/reflectance imaging system.

While such a multi-spot confocal microscope arrangement works well for fluorescence microscopy, however, for reflectance imaging the camera detects a great deal of stray light that originates from DMD itself. Specifically, when a light source, such as an LED, illuminates DMD, a part of that illumination is reflected to the LED by DMD micromirrors (mostly, its edges). It thus goes to the camera through the beamsplitter, as shown in **Fig. 1****.**

This problem is avoided in fluorescence imaging **[2-5]** by a combination of dichroic beamsplitter (BS in Fig. 1) and/or emission filter, which stops illumination wavelength from reaching a camera and lets through fluorescence that comes only from a sample. Thus, the difficulty of utilizing a DMD in a regular double-pass geometry to image sample reflectivity is associated with the fact that the DMD itself presents a source of reflections of overwhelming intensity that cannot be rejected in such a configuration. Other filtering methods such as polarization filtering do not work either in reflectance imaging of a sample because DMD changes polarization from linear to elliptical, and thus, the back-reflection can easily go through the analyzer to the detector (camera). Thus, reflectance confocal imaging using DMD as a tool to produce multiple spots on a sample, which at the same time acts as multiple pinholes for reflected light from a sample, would work only for strongly reflecting objects where back-reflections from DMD will not dominate **[6].** For weak reflections, like in biological tissue, back reflections from DMD would dominate and limit the number of photons being detected from a sample.

In the US patent US5587 832 and the US patent US5,867,251, two multiple pattern aperture arrays, which can be DMDs, are used in tandem: the first one - for illumination of the sample, and the second one - for detection of the reflected light from the sample. While this configuration helps avoid back-reflections from DMD from being detected by a camera, it, however, requires two DMDs. Furthermore, the closest prior art US5587 832 teaches-away to use two separate throughput aperture arrays operated in synchrony: *"confocal imaging is possible by using two separate throughput aperture arrays operated in synchrony for the multiple pattern aperture array 14 and the conjugate aperture pattern unit 32. However, this requires extremely careful optical alignment and timing to implement. A simpler alternative is to employ an optical configuration that avoids use of two synchronously timed aperture arrays. This could be achieved by passing the image from the specimen back to the detector through the same aperture array used to form the multiple pattern aperture array 14, thus using this single array in place of the conjugate aperture pattern unit 32. For this purpose, the multiple pattern aperture array 14 would be positioned between the beam splitter 22 and the lens 24 in* *FIG. 1**. However, this alternative requires precise optical alignment and would not provide a unit which could be easily attached to most conventional research microscopes."*

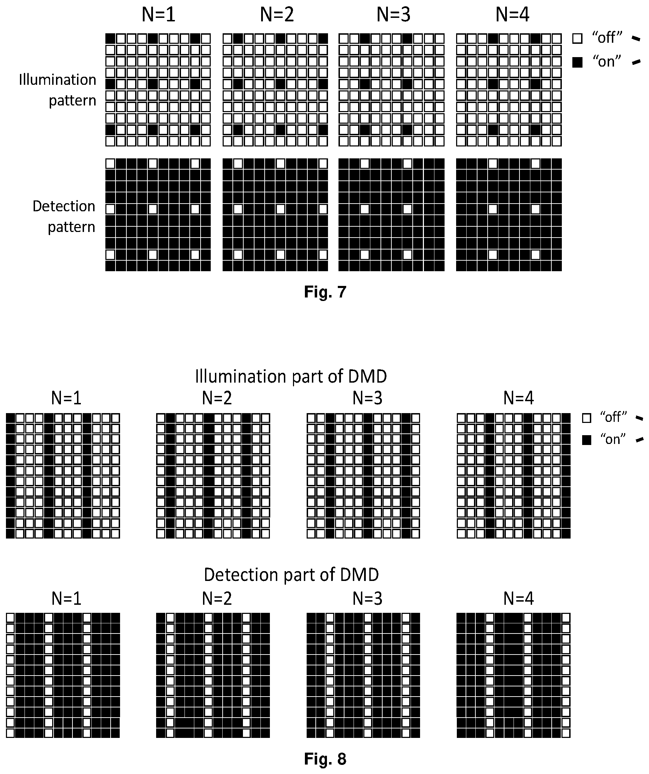

One more document, the European patent application EP4246205A1, (considered as the "closest prior art") discloses *"methods for single molecule localization microscopy that may use a patterned illumination over the field of view. The patterned illumination may be dynamically adapted to the approximate positions of the detected fluorescent molecule emitters, allowing for increased signal-to-background for their single molecule localization".* In this document EP4246205A1, a DMD device is employed in several embodiments, where this DMD device is set on the same path of light both for patterned illumination beam of the sample and for detecting the reflected light beam, where the two light beams in the single path of light propagation are separated, for example, by a dichroic mirror in Figure 7 of EP4246205A1.

### BRIEF DESCRIPTION OF THE INVENTION

**Technical problem.** In confocal reflectance microscopy where a single DMD is employed to produce multiple spots on a sample and, at the same time, the DMD acts as a pinhole array, the detection camera (e.g., CCD or CMOS) can be easily saturated by reflections from the DMD itself, leaving less of a dynamic range for an actual signal coming from the sample. This problem cannot be solved by using filters, such as spectral filters/dichroic (like in fluorescence imaging), or polarization filters because in reflectance imaging there is no wavelength change, and the DMD changes polarization from linear to elliptical enabling the backreflections to go through the analyzer to the detection camera. Thus, reflectance confocal imaging using a DMD as a tool to produce multiple spots on a sample and - at the same time - multiple pinholes would only work for strongly reflecting objects where back-reflections from the DMD are not dominant over the light reflected by the sample. This severely limits a range of applications where reflected light needs to be collected from a sample, such as in reflectance microscopy or optical coherence tomography (OCT).

Further, confocal imaging using two separate throughput aperture arrays (for example DMDs) operated in synchrony for the multiple pattern aperture array and the conjugate aperture pattern unit (like in **US patent** US5587 832**)** - requires extremely careful optical alignment and timing to implement.

Therefore, the problem solved by the present invention is how to make confocal reflectance microscopy with DMDs simple and efficient.

**Solution.** The present invention discloses a method and confocal optical imaging scheme (layout), where back reflections from the DMD are eliminated by splitting a single DMD area into two separate dedicated functional parts (areas comprising pluralities of micromirros), where one part of the DMD is used to generate multiple light spots that are projected on the sample, and the second (spatially separate) part of the DMD is used to implement a confocal detection array that is projected (imaged) on the detection/imaging camera. The optical layout of a reflectance confocal microscope employs a single digital micromirror device (DMD) for light control - illumination of the sample and confocal detection of its reflected light. The optical layout with separated illumination and detection paths and separated DMD areas thereof helps to avoid stray light coming from the DMD when a light source illuminates the DMD.

Further, using a single DMD comprising the large number of micromirrors, its working area can be split into two ones for those different functions, with a perfect optical alignment. The first area of DMD to be used to prepare illumination light (a plurality of light spots on a sample) by directing light beam onto it, such as a light beam produced by an LED device. The second area of DMD to be used to implement confocal detection when the light reflected from a sample is imaged on it.

The two areas on the DMD can display the same pattern. For example, every 5^{th} micromirror can be switched "on" in both directions of the DMD (*x*- and *y-*coordinates) to produce an array of light spots on a sample and an array of pinholes in the detection.

However, a preferred embodiment of the DMD micromirrors contol is when the detection pinholes pattern is an inverse of the illumination spots pattern. That is micromirrors in "off" position will act as pinholes and send the confocal signal towards camera, whereas micromirrors in "on" position will reflect the out-of-focus light to a beam dump (not shown in Figures). Such an inverse pattern, compared to a non-inverted one, reflects the confocal signal in a different direction, in which it is easier to avoid various spurious reflection from the DMD to be detected by the camera.

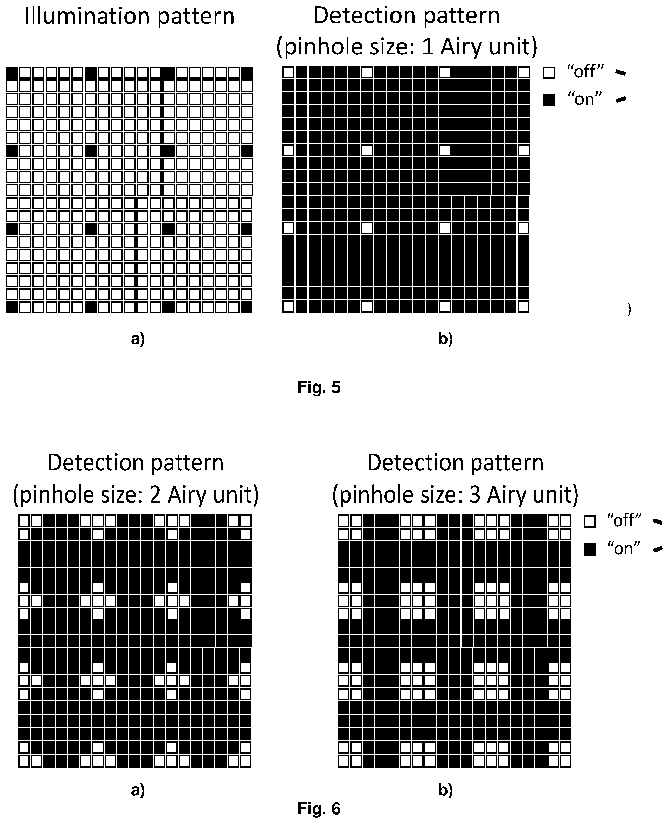

A 50:50 beamsplitter in the optical layout separates the sample reflectance signal from illumination light beam. A mirror in the reflectance signal path, positioned after the beamsplitter, can be tipped and/or tilted to accurately image an array/pattern of illumination spots reflected from the sample on the DMD's area of ability to change light spot patterns at a 22 kHz rate, a single confocal image can be acquired with a 22 kHz/N² frequency. A more sparse arrays of spots and pinholes (i.e., larger N) results in a better out-of-focus light rejection due to the lower crosstalk between the pinholes but also requires a longer time to acquire a single confocal image. Therefore, there is a trade-off between the out-of-focus light rejection and confocal imaging speed. Often the N range 5 to 10 is used as a preferred range for best image quality and imaging speed trade-off, and N = 7 is chosen as the optimal ballance, resulting in a 22 kHz/N² ≈ 450 Hz confocal imaging rate (450 confocal images are acquired per second). The present invention also allows to change the pinhole size, for example, expanding the pinhole by adding extra micro-mirrors around the central 'pinhole' micromirror (resulting in, for example, 2 or 3 Airy units as shown in Fig. 6), which is, for example, not possible in Refs **[1]** and **[6] or in the US patent** US5587 832**.** A bigger pinhole size results in higher signal but at the expense of optical sectioning. Finally, DMDs are widely available devices due to their use in projector technology, and thus, might enable the invention's wider use in fast confocal imaging.

The total number of micromirrors in modern DMDs can exceed one million of micromirrors. Therefore, if we define the number ***n*** as the number of micromirrors along one of the two directions of DMD - it can be more than a thousand (n > 1000). For example, the resolution of a modern DMD may be *n* x *n* = 1024 x 1024 micro-mirrors. Dividing such DMD area into two equal square parts - illumination and detection - results in *n*/*2* x *n*/*2 =* 512 x 512 micromirrors in each part. Every N^{th} micromirror in illumination part can be switched 'on' to generate an array of light spots on a sample, resulting in n/(2N) x n/(2N) array of spots. Similarly, for the detection part, every N^{th} micromirror in the detection part can be switched 'off' to generate an array of pinholes, resulting in n/(2N) x n/(2N) array of pinholes. For example, if every 10^{th} micromirror is switched on in the illumination part, we get an array with 2500 spots, forming 50 x 50 array. To achieve any confocal effect at least every second micromirror should be swithed 'on' (N = 2). Since the largest possible N value will be when there is only one micromirror switched 'on' in the illumination part, it means that the upper limit for N is n/2. This will turn the system in to a regular confocal microscope with one scanning beam. So, N can vary between 2 and n/2.

In another embodiment of scanning mode/pattern, the same optical layout can be used to implement line-scanning reflectance confocal microscopy by displaying line patterns on the DMD. Line-scanning, otherwise called slit-scanning also features a confocal gate but only in one direction, and therefore - weaker. However, line scanning confocal can be faster since it requires only N patterns instead of N² to completly scan a sample laterally.

Yet in another embodiment of the confocal microscopy device, the same optical layout can be used to implement confocal Full-Field Optical Coherence Tomography (FF-OCT) by adding a reference arm to the confocal microscopy layout. The FF-OCT, like wide-field reflectance imaging, does not feature a confocal gate, and therefore, the image detector (camera) detects out-of-focus light which leaves less room (dynamic range) for the actual signal coming from a defined plane in a sample. Therefore, the invention can be used to mechanically block out-of-focus light in FF-OCT, and thus, increase image quality. For this embodiment of the device, the invention is modified by adding the reference arm. For that, the illumination light that goes towards the sample and is reflected by BS (not used in the confocal implementation above) is used here to form a reference beam by inserting another objective lens (preferably the same as used for imaging a sample) and a flat reflector (like a mirror). The array of light spots is imaged onto the reflector, which it reflects to the beamsplitter. The reflector and the array of spots are effectively imaged on the camera. This ensures that the signal from a sample will interfere with the reference light provided that the optical paths in the sample and reference arms match within the coherence length of the light source used. Array spot scanning or line scanning can be performed to generate a confocal FF-OCT signal.

**Effects.** The invention (optical layout and imaging method) allows detection of more photons from a sample since spurious back-reflections originating from a DMD are not being detected by the camera. The invention also allows for changes in the detection pinhole size and distance between each pinhole (and scanning spots). Such control of the detection allows tuning the images with respect to image quality and imaging speed, similar to the confocal implementation above.

The invention allows imaging of weak reflections, especially, in biological tissue, by rejecting back reflections from the DMD, when a single DMD is used to implement a confocal microscope. Specifically, one part of the DMD is used to generate multiple spots on a sample, and a separate (the second) part of DMD is used to implement confocal detection. Physical separation of the illumination and detection light paths on DMD allows direct reflection from DMD away from the detector (camera).

### DESCRIPTION OF DRAWINGS

The drawings are provided as a reference to possible embodiments but are not intended to limit the scope of the invention. The drawings and the graphs presented herein should not be considered as limiting the scope of the invention, but merely as an example of a possible embodiment of the invention.
- **Fig. 1**: Prior art: an optical diagram of a confocal microscope based on DMD working in a double-pass configuration: the DMD spatially filters LED on the way towards the sample and then acts as an array of pinholes for the backscattered photons (signal). A beamsplitter (BS) seperates illumination beam from signal. An entire confocal image can be acquired within the integration time of a camera by quickly changing the multi-spot patterns on the DMD.
- **Fig. 2**: Prior art: a multitude of patterns that can be displayed on DMD to fully scan an entire region of interest on a sample. As presented in this figure, since every 4^{th} micromirror is switched "on", the scanning process requires to display 16 different patterns to perform the scan.

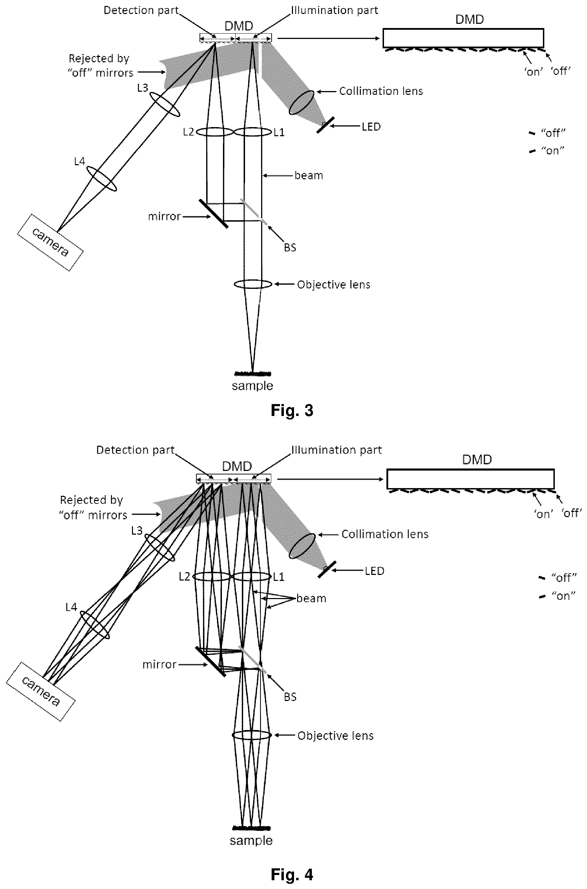

- **Fig. 3**: Invention: depicts an optical layout of a confocal microscope that uses a DMD with its working area split into two separate sub-areas: one for sample illumination, and another - for signal detection. Only one beam (and a light spot on the sample) is shown for illustrative purposes. The LED-emitted light beam is collimated by a lens and the resulting collimated light is delivered onto the illumination part of the DMD device. The illumination part of the DMD can display an array pattern, where every N^{th} micromirror is switched "on" that reflects the light beam towards the sample wherein the light beam forms a pattern of light spots. This is performed by imaging the illumination part of the DMD onto the sample, which can be done by a combination of two lenses: L1 and an objective lens (although it is also possible to do it with a single lens). The micromirrors that have been set to "off" position will send the light away from the illumination path. The reflected light signal to be detected - a pattern of light spots is reflected from the sample - is then imaged on the detection part of the DMD by means of the objective lens and L2 lens. The beamsplitter spatially separates the reflection signal from the illuminating light beam. The reflection signal after the beamsplitter is directed to a mirror which lays approximately in the focal plane of the L2 lens, which allows shifting the array of light spots laterally on the DMD detection part by tipping and/or tilting it. When the illumination and detection parts of the DMD are accurately matched, the out-of-focus light will be effectively rejected by "on" micromirrors in the DMD detection part (sub-area) when inverted detection patterns are used (compared to the illumination patterns). The confocal part will be reflected by the "off" mirrors in the DMD detection part towards the image registering device (camera), where the confocal signal is detected. The detection is carried out by imaging the DMD detection part onto a camera with a combination of L3 and L4 lenses (although it is also possible to do this with a single lens).
- **Fig. 4**: The same as Fig. 3 but three beams (corresponding to three light spots onto a sample) are shown for illustrative purposes.
- **Fig. 5**: The two sub-areas - **a)** illumination and **b)** detection sub-areas - of the DMD displaying opposite (inverse) patterns for producing an illumination pattern of spots and a detection pattern of pinholes.
- **Fig. 6**: depicts the detection part (sub-area) of the DMD with different pinhole sizes - **a)** a size of 2 Airy units and - **b)** a size of 3 Airy units.
- **Fig. 7**: depicts a plurality of patterns that can be displayed on the DMD to scan a sample; the figure shows changing illumination and detection patterns; only 4 patterns out of 16 are shown.
- **Fig. 8**: depicts a plurality patterns that can be displayed on the DMD to perform a line scan on a sample. It shows changing illumination and detection patterns. The same optical layout shown in Fig. 3 and Fig. 4 can be used to implement a line-scanning confocal microscope with the displayed patterns.

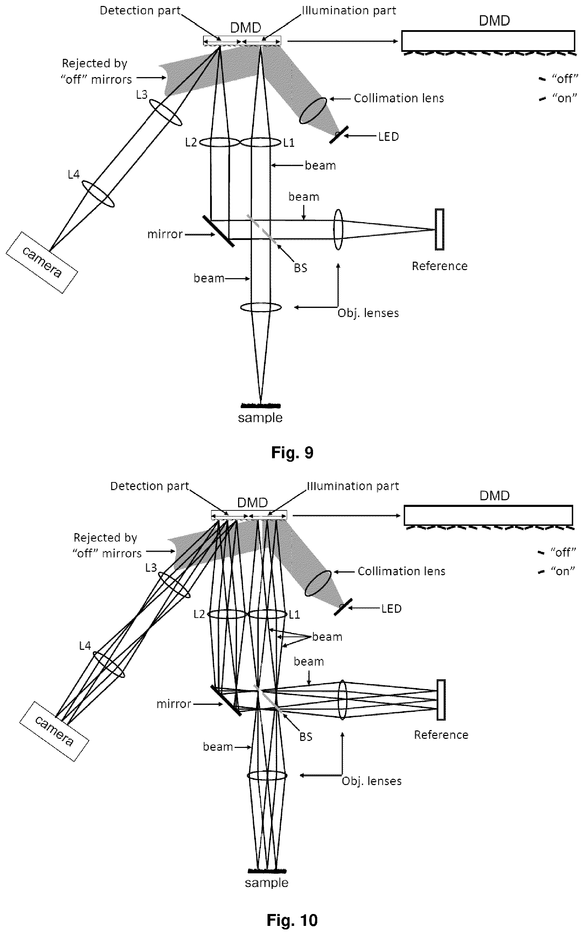

- **Fig. 9**: depicts an optical layout of a confocal Full-Field Optical Coherence Tomography/microscopy (FF-OCT/M) system that uses split DMD working area to separate sample illumination path from the reflectance signal detection path. Only one beam is shown for illustrative purposes. The system works in the same way as described in Fig. 3, except that the illumination light beam, which propagates towards the sample and is reflected by the beam splitter BS (not used in Fig. 3), in this FF-OCT/M layout is used to form a reference beam by inserting another objective lens (preferably the same as used for imaging a sample), and a flat reflector. The light (array of spots) reflected from the reflector is then imaged onto the detection part of the DMD where it can interfere with the signal from the sample, provided that the optical path of the signal and the reference light match within the coherence length of the used light source (such as LED). The interference pattern will be imaged onto the image detection camera with the help of L3 and L4 lenses. Phase-shifting the reflector by a piezo element can be used to extract the OCT signal as is regularly done in FF-OCT.
- **Fig. 10**: depicts the same optical layout as in Fig. 9 but three light beams are shown for illustrative purposes.

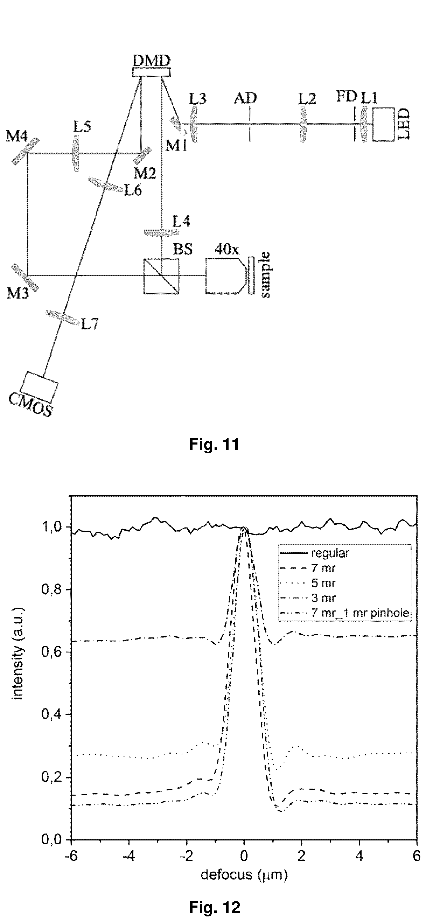

- **Fig. 11**: depicts schematic diagram of the reflectance confocal system. L1 - aspheric collimator (f = 16 mm); L2-L3 - 75 mm planoconvex lenses; L4-L5 - sets of 400 mm achromatic doublets in Plössl configuration; L6 - 150 mm achromatic doublet; L7 - a set of 200 mm achromatic doublets in Plössl configuration; M1-M4 - mirrors; BS - non-polarizing 50/50 beamsplitter; DMD - digital mirror device; LED - light-emitting diode; CMOS - CMOS camera; AD - aperture diaphragm; FD - field diaphragm.
- **Fig. 12**: depicts optical sectioning curves in regular and multispot scanning reflectance confocal microscopy system with different inter-focal distances. Inter-focal distances are specified in the number of micromirrors. The measurement with the specified pinhole size was performed with 1 micromirror pinhole, while the rest - with 2 × 2 micromirror pinhole.

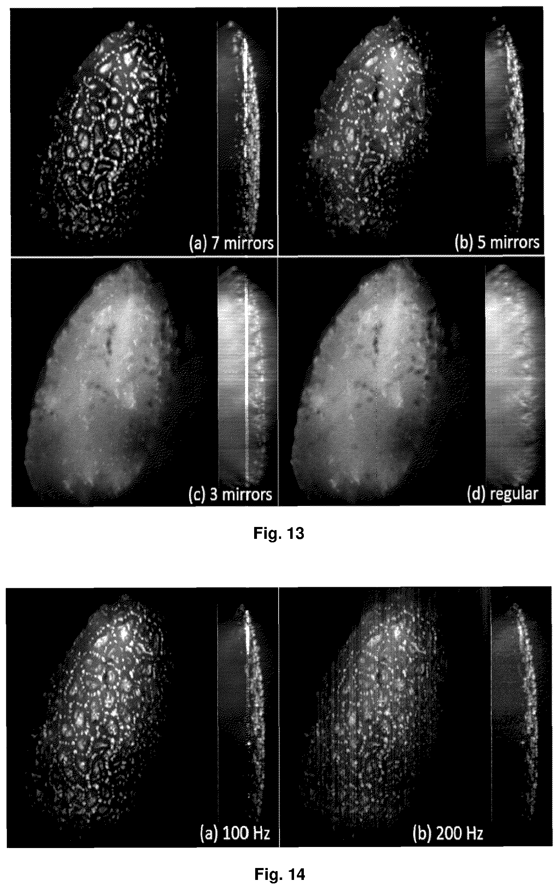

- **Fig. 13**: depicts **(a-c)** maximum intensity Z and X projections from stacks of 120 reflectance images of a lily pollen grain acquired with 0.25 µm step in multi-spot scanning mode with different inter-focal distances and 2 × 2 micromirror pinhole; **(d)** maximum intensity projection obtained in a regular full-field mode.
- **Fig. 14**: depicts maximum intensity Z and X projections from image stacks of 120 reflectance images of lily pollen grain acquired with 0.25 µm step in multi-spot scanning mode at
**(a)** 100 Hz camera frame rate;
**(b)** 200 Hz camera frame rate.

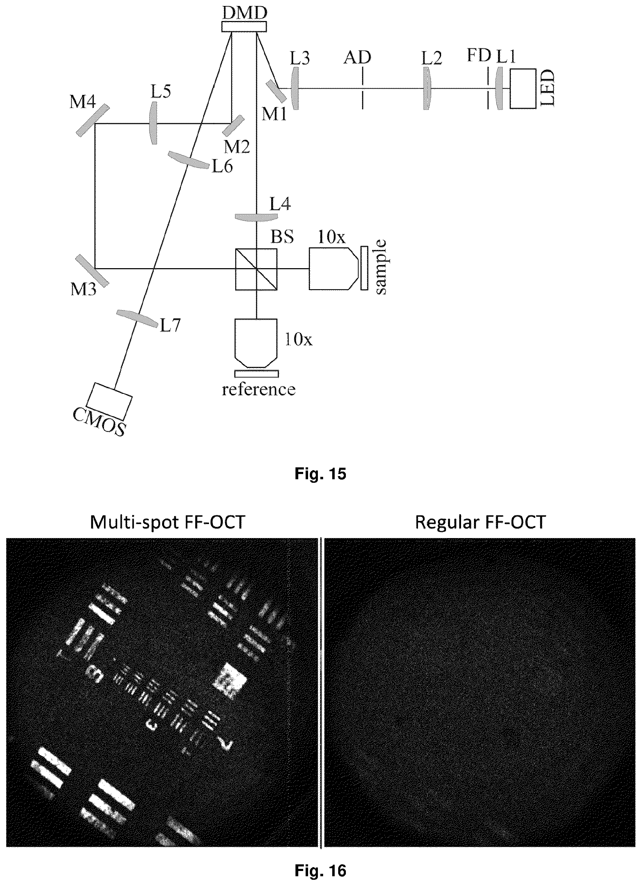

- **Fig. 15**: depicts schematic optical layout of the FF-OCT system. L1 - aspheric collimator (f = 16 mm); L2-L3 - 75 mm planoconvex lenses; L4-L5 - sets of 400 mm achromatic doublets in Plössl configuration; L6 - 150 mm achromatic doublet; L7 - a set of 200 mm achromatic doublets in Plössl configuration; M1-M4 - mirrors; BS - non-polarizing 50/50 beamsplitter; DMD - digital mirror device; LED - light-emitting diode; CMOS - CMOS camera; AD - aperture diaphragm; FD - field diaphragm.
- **Fig. 16**: depicts FF-OCT images acquired with multi-spot illumination, where every 7^{th} micromirror was switched "on" in the DMD illumination part, while every 7^{th} micromirror is "off" in the DMD detection part, and a regular FF-OCT, where all the micromirrors were switched "on" in the DMD illumination part, and all the micromirrors were switched "off" in the DMD detection part.

### DETAILED DESCRIPTION OF THE INVENTION

The invention is based on using different separate parts of the DMD working area of micromirrors for producing an array (pattern) of illumination spots and an array (pattern) of pinholes. This splitting of the DMD prevents the back reflections from DMD from reaching the camera in a configuration where confocal image is acquired within a single integration time of a camera. Furthermore, using a single DMD device reflecting two paths suggests a perfect optical allignment of those optical paths.

**Implementation of reflectance confocal microscopy.** The preferred layout of the reflectance microscopy setup according to the invention is shown in **Fig. 11****.** The DMD (V-7001 (Vialux) is illuminated by an LED (M660L4, Thorlabs) with a central wavelength of 660 nm. For that, Kohler illumination was used that consisted of three lenses: L1 (f = 16 mm), L2 (f = 75 mm), and L3 (f = 75 mm) as well as a field (FD) and aperture (AD) diaphragms, which ensured minimal light scatter in the system. The DMD is mounted on a holder and rotated at 45° so that the impinging and reflected light is in one plane, parallel to the table. The DMD chip comprises 1024 x 768 micromirrors, each 13.7 µm x 13.7 µm in size and capable of being refreshed at the rate of 22.7 kHz (limited by the dead time of 44 µs). A multi-spot pattern is generated on one half of the DMD by switching the corresponding micromirrors "on" and the rest of the micromirrors "off". The multispot micromirror pattern was imaged onto a sample by L4 (f = 200 mm) and objective (f = 4.5 mm, 40x/0.75, UPlan FLN, Olympus) lenses. The illumination light beam is directed to the objective by a non-polarizing 50/50 beamsplitter, which also passes the reflected light from the sample, which then is sent onto the DMD detection part my mirrors M3, M4, and M2, through L5 (f = 200 mm) lens. A pattern of digital pinholes is generated on the detection part of DMD by switching the corresponding mirrors "off" and the rest of the mirrors "on", which is simply an inverse of the first part of DMD, as shown in **Fig. 5****.** An image of the DMD half with digital pinholes is imaged onto a CMOS camera (acA2040-180kmNIR, Basler) by L6 (f = 150 mm) and L7 (f = 100 mm) lenses. A sample is mounted on a 3D-translation stage that can be moved by a stepper motor (T-NA08A25-S, Zaber).

The illumination can be made full-field when all the DMD micromirrors were turned "on" on the DMD illumination part (half), and "off" on the DMD imaging part (half). The FF-OCT image acquired in such FF-OCT mode is shown in Fig. 13(d). In a multi-spot mode, a grid pattern of individual micromirrors in the "on" state on the DMD illumination half after being reflected by the sample was precisely overlapped with a grid pattern of individual micromirrors in the "off" state on the DMD reflectance imaging half by tip&tilt control of the M3 mirror. To effectively scan a specific region of interest, all the different micromirror patterns at a chosen inter-focal distance were sequentially exposed by DMD during a single CMOS exposure period. Illumination spots were 1 micromirror, while the pinholes were either 1 or 2 × 2 micromirrors that correspond to 1 and 2 Airy discs, respectively. The array of illumination spots was with different, 7, 5, and 3 mirror inter-focal distances corresponding to 49, 25, and 9 DMD patterns, respectively. Since all the different patterns have to be exposed by the DMD during a single camera exposure, the greater number of patterns leads to a shorter single pattern illumination time and thus weaker reflectance signal. Therefore, a trade-off exists between the camera acquisition rate and the detected reflectance signal intensity.

To demonstrate the advantage of multi-spot scanning in full-field reflectance microscopy, we measured the axial response, otherwise called the "optical sectioning curve" **(****Fig. 12****)** by stepping a mirror in the sample arm along the optical axis. This was done with different inter-focal distances and digital pinhole sizes. The obtained intensity profile is a peak with a non-zero baseline that is due to the cross-talk of the adjacent foci/pinholes. The level of the baseline is higher for smaller inter-focal distances since the cross-talk sets in at a smaller value of defocusing. On the other hand, the shape and the FWHM at different inter-focal distances is similar and is about 1.25 µm. In the regular full-field mode there was barely any change of intensity over the same axial range as can be seen in **Fig. 12****.** The effect of multi-spot scanning for full-field reflectance imaging was demonstrated on a sample of lily pollen grains. Lilly pollen was harvested from lily blossoms and the grains were immobilized on a piece of double-sided sticky tape for microscopic observation. For demonstration, the camera exposure time was set to 30 ms (33 Hz camera frame rate) so that LED illumination was sufficient to generate enough reflectance signal to exploit the full dynamic range of the camera even with the largest used inter-focal distance and the number of DMD patterns.

A comparison of full-field images obtained with and without multi-spot scanning is presented in **Fig. 13****.** The amount of visible detail and the level of the out-of-the-focal background are strongly dependent on the inter-focal distance. Fine pollen surface structures are visible with 7 and 5 micromirrors inter-focal distance, while at the same time, the background is visibly higher at 5 micromirrors compared to 7 mirrors. With 3 micromirrors inter-focal distance, the acquired image is marginally different from the one obtained in a regular full-field mode without the multi-spot scanning.

Furthermore, the rate of acquisition can be increased by shortening the camera exposure time, albeit at the expense of the detected signal intensity. **Fig. 14** shows examples of maximum intensity projections of the same lily pollen grain with 100 and 200 Hz camera acquisition rates. Although the signal-to-noise ratio is degraded compared to that at a slower acquisition rate, this demonstrates the possibility of relatively high-rate acquisition.

**Implementation of confocal FF-OCT - Full Field Optical Coherence Tomography,** The preferred layout of the invented reflectance microscopy setup is shown in **Fig. 15****.** The description of the system is the same as above for the confocal microscope except that a reference arm is added featuring another objective. The objective lenses are also different - here we used two 10x/0.25, Plan N, Olympus. The whole reference arm was mounted on a translation stage, which effectively acted as a time delay (time-gating) line.

Phase-shifted images were acquired by imparting a different amount of phase shift using a reference reflector mounted on a piezo stack (STr-25, Piezomechanik). The FF-OCT image was extracted from three phase-shifted images. Fig. 16 compares two different FF-OCT images acquired in a regular FF-OCT mode and in confocal (multi-spot) FF-OCT mode, showing clear differences.

### REFERENCES: NON-PATENT LITERATURE

**[1]** M. Petráň, M. Hadravský, M. D. Egger, and R. Galambos, "Tandem-scanning reflected-light microscope," JOSA, vol. 58, no. 5, pp. 661-664, 1968.
[2] D. Dudley, W. M. Duncan, and J. Slaughter, "Emerging digital micromirror device (DMD) applications," in MOEMS display and imaging systems, 2003, vol. 4985: SPIE, pp. 14-25.
**[3]** D. Dan et al., "DMD-based LED-illumination super-resolution and optical sectioning microscopy," Scientific Reports, vol. 3, no. 1, pp. 1-7, 2013.
**[4]** V. Vliet, "Theory of confocal fluorescence imaging in the programmable array microscope (PAM)," Journal of Microscopy, vol. 189, no. 3, pp. 192-198, 1998.
**[5]** Q. S. Hanley, P. J. Verveer, M. J. Gemkow, D. Arndt-Jovin, and T. M. Jovin, "An optical sectioning programmable array microscope implemented with a digital micromirror device," Journal of microscopy, vol. 196, no. Pt 3, pp. 317-331, 1999.
**[6]** M. Liang, R. L. Stehr, and A. W. Krause, "Confocal pattern period in multiple-aperture confocal imaging systems with coherent illumination," Opt. Lett., vol. 22, no. 11, pp. 751-753, 1997.

## Claims

1. . A confocal reflectance microscopy device, comprising
- an optical layout configured to transmit a light beam *(beam)* for patterned illumination of a viewed sample *(sample)* from a light source *(LED),* and patterned reflection of the light arriving from the illuminated sample *(sample)* to an image-registering device *(camera),*
- wherein said patterned illumination and patterned reflection of the light beam *(beam)* is performed by a controlled digital micromirror device (DMD) comprising its working surface area of plurality of micromirrors,
**characterized in that**
- the light beam *(beam)* to be patterned is split into the illumination path (*illumination path*) and the reflectance path (*detection path*) by a beam splitter (BS) and a mirror (*mirror*)*,* wherein the DMD is a single DMD device having its reflecting surface area configured for control as two separated surface sub-areas (*illumination part, detection part*)*,* wherein
∘ the first sub-area *(illumination part)* is dedicated for patterned illuminating by light spots of the sample *(sample),* and
∘ the second sub-area (*detection part*) is dedicated for reflecting by a pattern of reflectance detection pinholes of the light reflected from the sample *(sample)* to the image-registering device *(camera).*

2. **.** The device according to claim 1, **wherein** the illumination light source *(LED)* is a LED device.

3. **.** The device according to claim 1, **wherein** the image registering device *(camera)* is a CCD camera, or a CMOS camera, or an InGaAs camera.

4. **.** The device according to claim 1, **wherein** the light beam beamsplitter (BS) is 50:50 splitter in the optical layout, for separating the detection path from the illumination path, and a mirror (*mirror*) in the detection path after the beamsplitter (*BS*), wherein the mirror (*mirror*) can be tipped and/or tilted to image the pattern of illumination spots reflected from the sample *(sample)* onto the second sub-area of the DMD (*detection part*)*.*

5. **.** The device according to any of claims 1 to 4, **wherein** it is a scanning reflectance confocal microscope.

6. **.** The device according to any of claims 1 to 4, **wherein** it is a confocal Full Field Optical Coherence Tomograph (FF-OCT) device, further comprising a reference arm to the confocal microscopy layout, wherein the illumination light that goes towards the sample and is reflected by the beamsplitter (BS) is used to form a reference beam.

7. **.** A method of confocal scanning in the device according to any of claims 1 to 6, wherein
- the DMD's first sub-area *(illumination part)* is configured to direct the patterned illumination light beam *(beam)* as a plurality of light spots onto the sample *(sample),*
- while the DMD's second sub-area (*detection part*) is configured to direct the patterned light beam *(beam)* reflected from the sample *(sample)* as a plurality of detection pinholes, for confocal detection by the image registering device *(camera).*

8. **.** The method according to claim 7, **wherein** the DMD in the illumination sub-area comprises a n/2 x n/2-sized array of micromirors, wherein
- in said array every NxN^{th} micromirror is switched "on" (meaning every Nth micromirror is switched 'on' in each direction of DMD) to produce an array of spots onto the sample *(sample)* by the illumination sub-area, while the remaining micromirrors in the illumination sub-area - are "off", wherein N is selected any from range of 2 to n/2, and where n is a number of micromirrors along any one coordinates direction of the illumination sub-area *(illumination part).*

9. **.** The method according to claim 8, **wherein** the N is in the range from 5 to 10, and preferably the N is 7.

10. **.** The method according to claim 7, **wherein** the DMD in the detection sub-area comprises a n/2 x n/2-sized array of micromirors, wherein
- in each said array every NxN^{th} micromirror is switched "on" to produce an array of detection pinholes in the detection sub-area, which are imaged onto image registering device *(camera),* while the remaining micromirrors in said n/2 x n/2-sized array are "off", wherein N can be any value from every 2 to n/2, where n is a number of micromirrors along any one coordinates direction of the DMD.

11. **.** The method according to claim 10, **wherein** the N is in the range from 5 to 10 and preferably is 7.

12. **.** The method according to any claims 7 to 11, **wherein** the DMD's detection pinhole pattern of the light beam *(beam)* is an inverse pattern to the illumination pattern of light spots, to prevent the image registering device *(camera)* not to detect the light reflected by the DMD's illumination part *(illumination part).*

13. **.** The method according to claim 7, **wherein** the illumination spot and reflectance detection pinhole patterns comprise N illumination lines and the corresponding N reflectance line-shaped slits, thereby requiring N different patterns to form a confocal image of the sample.

14. **.** The method according to claim 7, **wherein** changing the number of micromirrors that are switched "off" in the DMD detection part (*detection part*) is used to effectively change the size of each detection pinhole, thereby changing the width of the optical sectioning curve and the reflectance light signal strength.

15. **.** The method according to claim 14, **wherein** the size of each detection pinhole is 2 or 3 Airy units around the detection pinhole center.

## Patentansprüche

1. Konfokale Mikroskopievorrichtung mit Reflexion, umfassend
- ein optisches Layout, das dazu konfiguriert ist, einen Lichtstrahl *(Strahl)* zur strukturierten Beleuchtung einer betrachteten Probe *(Probe)* von einer Lichtquelle *(LED)* und eine strukturierte Reflexion des Lichts, das von der beleuchteten Probe *(Probe)* ankommt, an eine Bildaufzeichnungsvorrichtung *(Kamera)* zu übertragen,
- wobei die strukturierte Beleuchtung und die strukturierte Reflexion des Lichtstrahls *(Strahls)* durchgeführt wird von einer gesteuerten digitalen Mikrospiegelvorrichtung (DMD), die ihren Arbeitsoberflächenbereich aus einer Vielzahl von Mikrospiegeln umfasst,
**dadurch gekennzeichnet, dass**
- der zu strukturierende Lichtstrahl *(Strahl)* von einem Strahlteiler (BS) und einem Spiegel *(Spiegel)* in den Beleuchtungspfad *(Beleuchtungspfad)* und den Reflexionspfad (Detektionspfad) aufgeteilt wird, wobei die DMD eine einzelne DMD-Vorrichtung ist, deren reflektierender Oberflächenbereich zur Steuerung als zwei separate Oberflächenteilbereiche *(Beleuchtungsteil, Detektionsteil)* konfiguriert ist, wobei
∘ der erste Teilbereich *(Beleuchtungsteil)* zum strukturierten Beleuchten durch Lichtpunkte der Probe *(Probe)* vorgesehen ist und
∘ der zweite Teilbereich *(Detektionsteil)* zum Reflektieren durch eine Struktur von Reflexions-Detektionslochblenden des Lichts, das von der Probe *(Probe)* an die Bildaufzeichnungsvorrichtung *(Kamera)* reflektiert wird, vorgesehen ist.

2. Vorrichtung nach Anspruch 1, wobei die Beleuchtungslichtquelle *(LED)* eine LED-Vorrichtung ist.

3. Vorrichtung nach Anspruch 1, wobei die Bildaufzeichnungsvorrichtung *(Kamera)* eine CCD-Kamera oder eine CMOS-Kamera oder eine InGaAs-Kamera ist.

4. Vorrichtung nach Anspruch 1, wobei der Lichtstrahl-Strahlteiler *(BS)* ein 50:50-Teiler in dem optischen Layout ist, zum Trennen des Detektionspfads von dem Beleuchtungspfad, und ein Spiegel *(Spiegel)* in dem Detektionspfad nach dem Strahlteiler *(BS),* wobei der Spiegel *(Spiegel)* dazu gekippt und/oder geneigt werden kann, die Struktur der von der Probe *(Probe)* reflektierten Beleuchtungspunkte auf den zweiten Teilbereich der DMD *(Detektionsteil)* abzubilden.

5. Vorrichtung nach einem der Ansprüche 1 bis 4, wobei es sich um ein konfokales Scanning-Mikroskop mit Reflexion handelt.

6. Vorrichtung nach einem der Ansprüche 1 bis 4, wobei es sich um eine konfokale Vorrichtung zur optischen Full-Field-Kohärenztomografie (FF-OCT) handelt, die ferner einen Referenzarm zu dem konfokalen Mikroskopie-Layout umfasst, wobei das Beleuchtungslicht, das in Richtung der Probe geht und von dem Strahlteiler (BS) reflektiert wird, dazu verwendet wird, einen Referenzstrahl zu bilden.

7. Verfahren zum konfokalen Scannen in der Vorrichtung nach einem der Ansprüche 1 bis 6, wobei
- der erste Teilbereich der DMD *(Beleuchtungsteil)* dazu konfiguriert ist, den strukturierten Beleuchtungslichtstrahl *(Strahl)* als eine Vielzahl von Lichtpunkten auf die Probe *(Probe)* zu leiten,
- während der zweite Teilbereich der DMD *(Detektionsteil)* dazu konfiguriert ist, den strukturierten Lichtstrahl *(Strahl),* der von der Probe *(Probe)* als eine Vielzahl von Detektionslochblenden reflektiert wird, zur konfokalen Detektion durch die Bildaufzeichnungsvorrichtung *(Kamera)* zu leiten.

8. Verfahren nach Anspruch 7, wobei die DMD in dem Beleuchtungsteilbereich ein Mikrospiegel-Array der Größe n/2 x n/2 umfasst, wobei
- in dem Array jeder NxN-te Mikrospiegel dazu "eingeschaltet" ist (was bedeutet, dass jeder N-te Mikrospiegel in jede Richtung der DMD "eingeschaltet" ist), ein Array von Punkten auf der Probe *(Probe)* durch den Beleuchtungsteilbereich zu erzeugen, während die übrigen Mikrospiegel in dem Beleuchtungsteilbereich "aus" sind, wobei N beliebig ausgewählt wird aus dem Bereich von 2 bis n/2 und wobei n eine Anzahl von Mikrospiegeln entlang einer beliebigen Koordinatenrichtung des Beleuchtungsteilbereichs *(Beleuchtungsteils)* ist.

9. Verfahren nach Anspruch 8, wobei N in dem Bereich von 5 bis 10 liegt und N vorzugsweise 7 ist.

10. Verfahren nach Anspruch 7, wobei die DMD in dem Detektionsteilbereich ein Mikrospiegel-Array der Größe n/2 x n/2 umfasst, wobei
- in jedem Array jeder NxN-te Mikrospiegel dazu "eingeschaltet" ist, ein Array von Detektionslochblenden in dem Detektionsteilbereich zu erzeugen, die auf der Bildaufzeichnungsvorrichtung *(Kamera)* abgebildet werden, während die übrigen Mikrospiegel in dem Array der Größe n/2 x n/2 "aus" sind, wobei N ein beliebiger Wert von 2 bis n/2 sein kann, wobei n eine Anzahl von Mikrospiegeln entlang einer beliebigen Koordinatenrichtung der DMD ist.

11. Verfahren nach Anspruch 10, wobei N in dem Bereich von 5 bis 10 liegt und vorzugsweise 7 ist.

12. Verfahren nach einem der Ansprüche 7 bis 11, wobei die DMD-Detektionslochblenden-Struktur des Lichtstrahls *(Strahls)* eine umgekehrte Struktur zu der Beleuchtungsstruktur der Lichtpunkte dazu ist, die Bildaufzeichnungsvorrichtung (Kamera) daran zu hindern, das von dem DMD-Beleuchtungsteil *(Beleuchtungsteil)* reflektierte Licht nicht zu erfassen.

13. Verfahren nach Anspruch 7, wobei die Strukturen der Beleuchtungspunkte und der Reflexions-Detektionslochblenden N Beleuchtungslinien und die entsprechenden N reflexionslinienförmigen Schlitze umfassen, wodurch N verschiedene Strukturen dazu erforderlich sind, ein konfokales Bild der Probe zu bilden.

14. Verfahren nach Anspruch 7, wobei Ändern der Anzahl an Mikrospiegeln, die in dem DMD-Detektionsteil *(Detektionsteil)* "ausgeschaltet" sind, dazu verwendet wird, die Größe jeder Detektionslochblende effektiv zu ändern und somit die Breite der optischen Schnittkurve und die Stärke des reflektierten Lichtsignals zu ändern.

15. Verfahren nach Anspruch 14, wobei die Größe jeder Detektionslochblende 2 oder 3 Airy-Einheiten um den Mittelpunkt der Detektionslochblende beträgt.

## Revendications

1. Dispositif de microscopie de réflectance confocale, comprenant
- une configuration optique configurée pour transmettre un faisceau lumineux *(faisceau)* à partir d'une source lumineuse *(LED)* pour l'illumination structurée d'un échantillon observé *(échantillon),* et pour la réflexion structurée de la lumière provenant de l'échantillon illuminé *(échantillon)* vers un dispositif d'acquisition d'images *(caméra),*
- dans lequel ladite illumination structuré et ladite réflexion structurée du faisceau lumineux *(faisceau)* sont réalisés par un dispositif à micromiroirs numériques commandé (DMD) comprenant sa surface active constituée d'une pluralité de micromiroirs, **caractérisé en ce que**
- le faisceau lumineux (*faisceau*) à structurer est divisé en le trajet d'illumination (*trajet d'illumination*) et le trajet de réflectance (*trajet de détection*) par un séparateur de faisceau (*BS*) et un miroir (*miroir*)*,* le DMD étant un dispositif DMD unique dont la surface réfléchissante est configurée pour être contrôlée en deux sous-zones distinctes (*partie d'illumination, partie de détection*)*,* dans lequel
∘ la première sous-zone (*partie d'illumination*) est dédiée à l'illumination structurée de l'échantillon par des points lumineux, et
∘ la deuxième sous-zone (*partie de détection*) est dédiée à la réflexion, par un motif de trous d'épingle de détection de réflectance, de la lumière réfléchie par l'échantillon (*échantillon*) vers le dispositif d'enregistrement d'image (*caméra*)*.*

2. Dispositif selon la revendication 1, dans lequel la source de lumière d'illumination (LED) est un dispositif LED.

3. Dispositif selon la revendication 1, dans lequel le dispositif d'enregistrement d'image (*caméra*) est une caméra CCD, ou une caméra CMOS, ou une caméra InGaAs.

4. Dispositif selon la revendication 1, dans lequel le séparateur de faisceau lumineux (*BS*) est un séparateur 50 : 50 dans la configuration optique, pour séparer le trajet de détection du trajet d'illumination, et un miroir (*miroir*) dans le trajet de détection après le séparateur de faisceau (*BS*)*,* dans lequel le miroir (*miroir*) peut être incliné et/ou basculé pour projeter l'image du motif des points d'illumination réfléchis par l'échantillon (*échantillon*) sur la deuxième sous-zone du DMD (*partie de détection*)*.*

5. Dispositif selon l'une quelconque des revendications 1 à 4, dans lequel il s'agit d'un microscope confocal à réflectance à balayage.

6. Dispositif selon l'une quelconque des revendications 1 à 4, dans lequel il s'agit d'un dispositif de tomographie par cohérence optique à champ complet confocal (FF-OCT), comprenant en outre un bras de référence pour la configuration de microscopie confocale, dans lequel la lumière d'illumination qui se dirige vers l'échantillon et est réfléchie par le séparateur de faisceau (*BS*) est utilisée pour former un faisceau de référence.

7. Procédé de balayage confocal dans le dispositif selon l'une quelconque des revendications 1 à 6, dans lequel
- la première sous-zone du DMD (*partie d'illumination*) est configurée pour diriger le faisceau lumineux d'illumination structurée (*faisceau*) sous forme d'une pluralité de points lumineux sur l'échantillon (*échantillon*)*,*
- tandis que la deuxième sous-zone du DMD (*partie de détection*) est configurée pour diriger le faisceau lumineux structuré (*faisceau*) réfléchi par l'échantillon (*échantillon*) sous forme d'une pluralité de trous d'épingle de détection, pour la détection confocale par le dispositif d'enregistrement d'image (*caméra*)*.*

8. Procédé selon la revendication 7, dans lequel le DMD dans la sous-zone d'illumination comprend un réseau de micromiroirs de taille n/2 x n/2, dans lequel
- dans ledit réseau, chaque NxN^{ième} micromiroir est activé (ce qui signifie que chaque N^{ième} micromiroir est activé dans chaque direction du DMD) pour produire un réseau de points sur l'échantillon par la sous-zone d'illumination, tandis que les micromiroirs restants dans la sous-zone d'illumination sont désactivés, dans lequel N est sélectionné dans une plage de 2 à n/2, et où n est un nombre de micromiroirs le long d'une direction de coordonnées quelconque de la sous-zone d'illumination (*partie d'illumination*)*.*

9. Procédé selon la revendication 8, dans lequel N est compris entre 5 et 10, et de préférence N est 7.

10. Procédé selon la revendication 7, dans lequel le DMD de la sous-zone de détection comprend un réseau de micromiroirs de taille n/2 x n/2, dans lequel
- dans chaque dit réseau, chaque NxN^{ième} micromiroir est activé pour produire un réseau de trous d'épingle de détection dans la sous-zone de détection, qui sont imagés sur le dispositif d'enregistrement d'images (*caméra*), tandis que les micromiroirs restants dans ledit réseau de taille n/2 x n/2 sont désactivés, dans lequel N peut être n'importe quelle valeur de 2 à n/2, où n est un nombre de micromiroirs le long de n'importe quelle direction de coordonnées du DMD.

11. Procédé selon la revendication 10, dans lequel N est compris entre 5 et 10 et de préférence est 7.

12. Procédé selon l'une quelconque des revendications 7 à 11, dans lequel le motif de trous d'épingle de détection du faisceau lumineux (*faisceau*) du DMD est un motif inverse au motif d'illumination des points lumineux, afin d'empêcher le dispositif d'enregistrement d'image (*caméra*) de ne pas détecter la lumière réfléchie par la partie d'illumination du DMD (*partie d'illumination*)*.*

13. Procédé selon la revendication 7, dans lequel le point d'illumination et les motifs de trous d'épingle de détection de réflectance comprennent N lignes d'illumination et les N fentes correspondantes en forme de ligne de réflectance, nécessitant ainsi N motifs différents pour former une image confocale de l'échantillon.

14. Procédé selon la revendication 7, dans lequel la modification du nombre de micromiroirs qui sont désactivés dans la partie de détection DMD (*partie de détection*) est utilisée pour modifier efficacement la taille de chaque trou d'épingle de détection, modifiant ainsi la largeur de la courbe de sectionnement optique et la force du signal lumineux de réflectance.

15. Procédé selon la revendication 14, dans lequel la taille de chaque trou d'épingle de détection est de 2 ou 3 unités Airy autour du centre du trou d'épingle de détection.
